# EUROPÄISCHE PATENTSCHRIFT

(11) **EP 4 514 628 B1**
(45) Veröffentlichungstag und Bekanntmachung des Hinweises auf die Patenterteilung: **18.11.2026**
(21) Anmeldenummer: 23712156.1
(22) Anmeldetag: 09.03.2023
(51) Int. Cl.: B60C 11/03, B60C 11/12, B60C 11/13

(54) **FAHRZEUGLUFTREIFEN MIT EINEM PROFILIERTEN LAUFSTREIFEN**
VEHICLE TIRE WITH A PROFILED TREAD
PNEU DE VÉHICULE À BANDE DE ROULEMENT PROFILÉE

(30) Priorität: 29.04.2022 DE 102022204218
(43) Veröffentlichungstag der Anmeldung: 05.03.2025
(73) Patentinhaber: Continental Reifen Deutschland GmbH, 30175 Hannover (DE)
(72) Erfinder: KHOO, Jan-Sen, 30175 Hannover (DE); HERBST, Stephan, 30175 Hannover (DE); BEHR, Ulrich, 30175 Hannover (DE)
(74) Vertreter: Continental Corporation
(86) Internationale Anmeldenummer: PCT/DE2023/200049
(87) Internationale Veröffentlichungsnummer: WO 2023/208293

(56) Entgegenhaltungen:
- EP-A1- 3 521 064
- EP-A1- 3 560 734
- DE-A1- 102014 203 546
- FR-A1- 2 995 253

## Beschreibung

Die Erfindung betrifft einen Fahrzeugluftreifen aufweisend einen profilierten Laufstreifen mit zumindest einem von zwei Umfangsrillen begrenzten Profilband, insbesondere eine Umfangsrippe oder eine Profilblockreihe, welches zumindest eine die beiden Umfangsrillen verbindende Rille mit einer Breite B von 0,4 mm bis 1,2 mm aufweist, wobei die Rille als lokale Verbreiterungen einen vertikalen Kanal und einen horizontalen Kanal aufweist, wobei der vertikale Kanal von einer Öffnung der Laufstreifenoberfläche nach radial innen verlaufend in den horizontalen Kanal mündet und über diesen mit den beiden Umfangsrillen verbunden ist.

Es ist üblich, Profilbänder von Laufstreifen mit derartigen Rillen zu versehen, um die Entwässerung des Profilbandes in die begrenzenden Umfangsrillen zu ermöglichen und somit ein Aufschwimmen bei Nässe zu verhindern. Der Bodenkontakt zwischen Laufstreifenoberfläche und Fahrbahn soll dabei so lange wie möglich gewahrt bleiben, um Längs- und Querkräfte weiter übertragen zu können.

Zur verbesserten Ableitung des Wassers in die Umfangsrillen ist es aus der DE 10 2014 210 823 A1, der DE 10 2019 211 027 A1, der EP 3 521 064 A1 und der EP 3 560 734 A1 bekannt, die Rille mit einem vertikalen Kanal, der über einen horizontalen Kanal mit den beiden Umfangsrillen verbunden ist, zu versehen. Ein vertikaler Kanal ist auch in der DE 10 2014 203546 A1 und der FR 2 995 253 A1 offenbart.

Diese als lokalen Verdickungen ausgebildeten Kanäle bilden jedoch Kavitäten, in welchen sich Fremdkörper wie kleine Steine verfangen können, wodurch die Kanäle blockiert sein können.

Es war die primäre Aufgabe der vorliegenden Erfindung, einen Reifen zu Verfügung zu stellen, dessen Nässeeigenschaften zuverlässiger und weiter verbessert sind.

Dies wird dadurch erreicht, dass der vertikale Kanal zumindest abschnittsweise einen nach radial innen hin abnehmenden Durchmesser D aufweist, wobei der Durchmesser D der größte Durchmesser eines Kreises ist, der in eine senkrecht zur radialen Richtung rR orientierte Querschnittsfläche F des vertikalen Kanals einbeschrieben werden kann.

Erstaunlicherweise hat es sich gezeigt, dass ein derart sich nach radial innen verjüngender vertikaler Kanal zuverlässigere und weiter verbesserte Nässeeigenschaften aufweist. Der zumindest abschnittsweise nach radial innen hin abnehmende Durchmesser D gewährleistet, dass Wasser in einem großen radial äußeren Volumen schnell aufgenommen werden kann. Die Abnahme des Durchmessers D nach radial innen vermeidet, dass Fremdkörper wie kleine Steine, Rollsplit oder ähnliches im vertikalen Kanal gefangen verbleiben oder in den horizontalen Kanal gelangen, was die Zuverlässigkeit und Effizienz der Wasserableitfähigkeit verschlechtern würde.

Somit ist ein Fahrzeugreifen zur Verfügung gestellt, dessen Wasserableitvermögen und damit die Nässeeigenschaften zuverlässiger sind und weiter verbessert sind.

Die Rille kann in einem Winkel von 45° bis 65°, bevorzugt von 55°, zur Umfangsrichtung U ausgerichtet sein. Die Rille kann eine radiale Tiefe T von weniger als 100% einer Profiltiefe T* aufweisen.

Eine vorteilhafte Ausführungsform ist dadurch gegeben, dass die Querschnittsfläche F zumindest abschnittsweise nach radial innen hin abnimmt. Auch durch eine zumindest abschnittsweise nach radial innen hin abnehmende Querschnittsfläche F ist die Wasseraufnahmefähigkeit des vertikalen Kanals verbesserbar und ein dauerhaftes Eindringen bzw. Feststecken von Fremdkörper zuverlässiger verhinderbar.

Eine vorteilhafte Ausführungsform ist dadurch gegeben, dass der Durchmesser D und/oder die Querschnittsfläche F von der Öffnung bis zum horizontalen Kanal hin stetig abnimmt. Bei einer stetigen Abnahme von der Öffnung bis zum horizontalen Kanal kann der jeweilige Wert von radial außen nach radial innen in einem oder mehreren Abschnitten konstant bleiben, nimmt aber insgesamt frei von Sprüngen ab. Dies wirkt dem Feststecken von Fremdkörpern entgegen.

Eine vorteilhafte Ausführungsform ist dadurch gegeben, dass der Durchmesser D und/oder die Querschnittsfläche F von einer Starttiefe S bis zum horizontalen Kanal kontinuierlich, insbesondere linear, abnimmt, wobei S 0 mm bis 2,0 mm, bevorzugt 1,0 mm bis 1,5 mm, besonders bevorzugt 1,3 mm bis 1,4 mm, beträgt. Es hat sich gezeigt, dass eine kontinuierliche, insbesondere lineare, Abnahme des Durchmessers D und/oder der Querschnittsfläche F ein Eindringen von Fremdkörpern in den horizontalen Kanal besonders zuverlässig verhindert. Gleichzeitig ist eine solche Rille besonders einfach herzustellen.

Eine vorteilhafte Ausführungsform ist dadurch gegeben, dass die Querschnittsfläche F rund, bevorzugt kreisförmig oder mit einer Haupterstreckungsrichtung, besonders bevorzugt kreisförmig, ausgebildet ist. Eine runde Querschnittsfläche F, welche frei von Ecken ist, hat sich dabei als besonders vorteilhaft herausgestellt.

Das Volumen des vertikalen Kanals kann über eine runde Querschnittsfläche F mit einer Haupterstreckungsrichtung eingestellt werten, ohne dass der Durchmesser D verändert werden muss. Es kann sich um eine ovalförmige oder ellipsoide Querschnittsfläche F handeln. Ein besonders einfach ausgeführter vertikaler Kanal kann eine kreisförmige Querschnittsfläche F aufweisen.

Eine vorteilhafte Ausführungsform ist dadurch gegeben, dass für den Durchmesser D und/oder die Querschnittsfläche F jeweils gilt, dass ein Verhältnis eines maximalen Wertes zu einem minimalen Wert 1,5 bis 3,3, bevorzugt 1,7 bis 2,5, besonders bevorzugt 2, beträgt. Eine derartige Abnahme des Durchmessers D und/oder der Querschnittsfläche F hat sich als besonders effizient herausgestellt. Der maximale Wert des Durchmessers kann 3,0 mm und der minimale Wert des Durchmessers kann 1,5 mm betragen.

Erfindungsgemäß weist das Profilband einen Einschnitt auf, welcher den vertikalen Kanal schneidet, weitgehend in Umfangsrichtung U verläuft und dabei vor einer benachbarten Vertiefung, insbesondere Rille, endet, wobei der Einschnitt eine Tiefe von 1 mm bis 3 mm, bevorzugt von 1,2 mm bis 1,8 mm, besonders bevorzugt von 1,5 mm, aufweist.

Der Einschnitt dient ebenfalls der Wasserabführung, um einen möglichst großen Oberflächenbereich des Profilbands abzudecken. Das über den Einschnitt gesammelte Wasser wird über die Rille in den vertikalen Kanal und von dort über den horizontalen Kanal in die Umfangsrillen abgeführt. Dabei hat der in Umfangsrichtung verlaufende Einschnitt nur einen sehr geringen negativen Einfluss auf das Vorbeifahrgeräusch.

Eine vorteilhafte Ausführungsform ist dadurch gegeben, dass die Rille eine Fase aufweist. Hierdurch kann ein Einrollen der Rillenkanten beim Bremsen vermieden werden, wodurch die Trockenbremseigenschaften verbessert sind.

Eine vorteilhafte Ausführungsform ist dadurch gegeben, dass sich der horizontale Kanal vom vertikalen Kanal zu beiden Umfangsrillen hin aufweitet. Hierdurch ist die Ableitung des Wassers in die Umfangsrillen weiter verbessert.

Eine vorteilhafte Ausführungsform ist dadurch gegeben, dass das Profilband, insbesondere der vertikale Kanal, einen Reifenäquator schneidet. Am Reifenäquator ist der Wasserdruck am höchsten, wodurch eine zügige Ableitung des Wassers zu den Umfangsrillen besonders vorteilhaft ist.

Eine besonders gleichmäßige Entwässerung des Profilbandes wird erreicht, wenn die Rille bezüglich einer Querschnitt-Mittelebene, welche bezogen auf die Längserstreckung der Rille durch die Mitte der Rille und in radialer Richtung verläuft, symmetrisch ausgeführt ist.

Eine vorteilhafte Wasserabführung wird erreicht, indem das Profilband über den gesamten Reifenumfang derartig ausgeführte Rillen aufweist.

Bei dem Reifen handelt es sich um einen Fahrzeugluftreifen, insbesondere radialer Bauart. Bevorzugt handelt es sich dabei um einen PKW-, Van- oder Light-Truck Reifen oder einen Zweiradreifen. Derartige Reifen profitieren besonders durch die vorteilhaften Entwässerungseigenschaften. Besonders bevorzugt handelt es sich um einen PKW-Luftreifen radialer Bauart.

Der erfindungsgemäße Reifen aufweisend den vorteilhaft profilierten Laufstreifen ist mittels formgebender Vulkanisation unter Verwendung eines Lamellenblech, welches in einem Formteil oder einem Formsegment einer Reifenvulkanisationsform befestigt ist und einen ein Profilnegativ im Laufstreifen formenden Blechteil und einen im Formteil bzw. Formsegment verankerbaren Blechteil aufweist, wobei der das Profilnegativ formende Blechteil als Negativkontur der auszuformenden erfindungsgemäßen Rille ausgeführt ist, herstellbar.

Alle in dieser Beschreibung wiedergegebenen Ausführungsformen der erfindungsgemäßen Fahrzeugluftreifen stellen Beispiele der Ausgestaltung der Erfindung dar und sind nicht einschränkend zu sehen. Entsprechend sind auch durch einzelne oder mehrere Merkmale einer Ausführungsform alleine oder die Kombination der Merkmale verschiedener Ausführungsformen weitere Ausführungsformen der Erfindung gegeben, die Gegenstand der Erfindung sind, soweit diese nicht explizit anders in der Beschreibung erläutert wird. Ferner sind auch Kombinationen von bevorzugten und besonders bevorzugten Ausführungsformen untereinander miteinander kombinierbar.

Weitere Merkmale, Vorteile und Einzelheiten der Erfindung werden nun anhand der schematischen Zeichnungen, die Ausführungsbeispiele darstellen, näher erläutert. Dabei zeigt die
Fig. 1 eine Draufsicht auf einen Abschnitt eines erfindungsgemäßen Laufstreifens;
Fig. 2 eine Ansicht auf einen entlang der Linie Z-Z der Fig. 1 verlaufenden Schnitt des Laufstreifens.

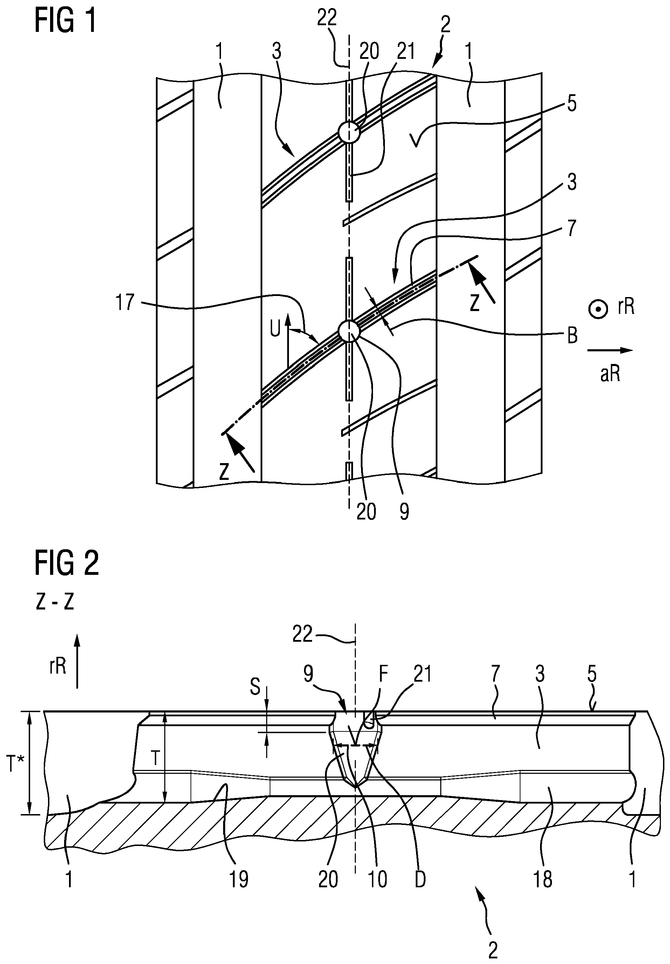

Die Fig. 1 zeigt eine Draufsicht auf einen Abschnitt eines Fahrzeugluftreifens aufweisend einen profilierten Laufstreifen mit zumindest einem von zwei Umfangsrillen 1 begrenzten Profilband 2, hier eine Umfangsrippe. Alternativ kann das Profilband auch als Profilblockreihe ausgeführt sein. Das Profilband 2 weist zumindest eine die beiden Umfangsrillen 1 verbindende Rille 3 mit einer Breite B von 0,4 mm bis 1,2 mm auf. Die Rille 3 kann eine radiale Tiefe T von weniger als 100% einer Profiltiefe T* aufweisen. Die Rille 3 weist als lokale Verbreiterungen einen vertikalen Kanal 20 und einen horizontalen Kanal 18 auf, wobei der vertikale Kanal 20 von einer Öffnung 9 der Laufstreifenoberfläche 5 nach radial innen verlaufend in den horizontalen Kanal 18 mündet und über diesen mit den beiden Umfangsrillen 1 verbunden ist. In der Fig. 1 ist der Einfachheit halber nur die Öffnung 9 dargestellt.

Der vertikale Kanal 20 weist zumindest abschnittsweise einen nach radial innen hin abnehmenden Durchmesser D auf, wobei der Durchmesser D der größte Durchmesser eines Kreises 10 ist, der in eine senkrecht zur radialen Richtung rR orientierte Querschnittsfläche F des vertikalen Kanals 20 einbeschrieben werden kann.

Das Profilband 2 kann in Umfangsrichtung U beabstandete und über den Umfang verteilt angeordnete derartige Rillen 3 aufweisen. Die Rillen 3 können alle gleich ausgeführt sein. Es können aber zumindest zwei Rillen voneinander verschieden ausgeführt sein. Der in der Fig. 1 dargestellte Abschnitt weist zwei in Umfangsrichtung U beabstandete zueinander parallele Rillen 3 auf. Die dargestellten Rillen 3 sind in ihren geometrischen Eigenschaften gleich ausgeführt.

Die Figuren 1 und 2 zeigen eine vorteilhafte Ausführung der Erfindung. Die Erfindung ist nicht auf diese Ausführung beschränkt.

Die Fig. 2 zeigt eine Ansicht auf einen entlang der Linie Z-Z der Fig. 1 verlaufenden Schnitt des Laufstreifens. Die Linie Z-Z der Fig. 1 verläuft dabei, bezogen auf eine Längserstreckung der Rille, durch die Mitte der Rille 3. Der dargestellte Schnitt verläuft durch die Mittenebene der Rille, d.h. entlang der Linie Z-Z der Fig. 1 und in radialer Richtung rR.

Die Rille ist in einem Winkel 17 von 45° bis 65°, bevorzugt von 55°, zur Umfangsrichtung U ausgerichtet.

Wie in der Fig. 2 dargestellt, nimmt die Querschnittsfläche F zumindest abschnittsweise nach radial innen hin ab.

Der Durchmesser D nimmt von der Öffnung 9 bis zum horizontalen Kanal 18 hin stetig ab. Die Querschnittsfläche F nimmt von der Öffnung 9 bis zum horizontalen Kanal 18 hin stetig ab. Der Durchmesser D und die Querschnittsfläche F nehmen jeweils von einer Starttiefe S bis zum horizontalen Kanal 20 kontinuierlich, insbesondere linear, ab, wobei S 0 mm bis 2,0 mm, bevorzugt 1,0 mm bis 1,5 mm, besonders bevorzugt wie hier dargestellt 1,3 mm bis 1,4 mm, beträgt.

Die Querschnittsfläche F ist rund, bevorzugt kreisförmig oder mit einer Haupterstreckungsrichtung, besonders bevorzugt kreisförmig, ausgebildet.

Für den Durchmesser D und/oder die Querschnittsfläche F gilt jeweils, dass ein Verhältnis eines maximalen Wertes zu einem minimalen Wert 1,5 bis 3,3, bevorzugt 1,7 bis 2,5, besonders bevorzugt 2, beträgt.

Das Profilband weist einen Einschnitt 21 auf, welcher den vertikalen Kanal 20 schneidet, weitgehend in Umfangsrichtung U verläuft und dabei vor einer benachbarten Vertiefung, insbesondere Rille 3, endet. Der Einschnitt 21 weist eine Tiefe von 1 mm bis 3 mm, bevorzugt von 1,2 mm bis 1,8 mm, besonders bevorzugt von 1,5 mm, auf.

Die Rille 3 weist eine Fase 7 auf. Der horizontale Kanal 18 ist vom vertikalen Kanal 20 zu beiden Umfangsrillen 1 hin aufgeweitet.

Das Profilband 2, bevorzugt der vertikale Kanal 20, schneidet einen Reifenäquator 22.

Die Erfindung ist auf die beschriebenen Ausführungsvarianten nicht beschränkt.

Der horizontale Kanal 18 kann derart ausgeführt sein, dass er den Rillengrund 19 der Rille 3 nicht mitbilden, sondern zu diesem in radialer Richtung rR einen Abstand von insbesondere mindestens 1,0 mm aufweist.

Die Rille kann in beliebigen Profilbändern 2 ausgebildet sein. Es kann sich wie in der Fig. 1 dargestellt um ein insbesondere mittiges Profilband handeln. Das Profilband kann als mittleres oder als schulterseitiges Profilband ausgebildet sein. Außerdem kann die Rille 3 in Draufsicht auch zumindest abschnittsweise wellen- oder zick-zack-förmig verlaufen, wobei die Kanäle 18, 20 weiterhin wie beschrieben ausgeführt sind.

Bei dem Reifen handelt es sich um einen Fahrzeugluftreifen, insbesondere radialer Bauart. Bevorzugt handelt es sich dabei um einen PKW-, Van- oder Light-Truck Reifen oder einen Zweiradreifen.

### Bezugszeichenliste

- 1: Umfangsrille
- 2: Umfangsrippe
- 3: Rille
- 5: Laufstreifenoberfläche
- 7: Fase
- 9: Öffnung
- 10: Kreis
- 17: Winkel
- 18: horizontaler Kanal
- 19: Rillengrund
- 20: vertikaler Kanal
- 21: Einschnitt
- 22: Reifenäquator

- B: Breite der Rille
- D: Durchmesser
- F: Querschnittsfläche
- S: Starttiefe
- T*: Profiltiefe
- aR: axiale Richtung
- rR: radiale Richtung
- U: Umfangsrichtung

## Patentansprüche

1. Fahrzeugluftreifen aufweisend einen profilierten Laufstreifen mit zumindest einem von zwei Umfangsrillen (1) begrenzten Profilband (2), insbesondere eine Umfangsrippe (2) oder eine Profilblockreihe, welches zumindest eine die beiden Umfangsrillen (1) verbindende Rille (3) mit einer Breite B von 0,4 mm bis 1,2 mm aufweist,
• wobei die Rille (3) als lokale Verbreiterungen einen vertikalen Kanal (20) und einen horizontalen Kanal (18) aufweist, wobei der vertikale Kanal (20) von einer Öffnung (9) der Laufstreifenoberfläche (5) nach radial innen verlaufend in den horizontalen Kanal (18) mündet und über diesen mit den beiden Umfangsrillen (1) verbunden ist,
• wobei der vertikale Kanal (20) zumindest abschnittsweise einen nach radial innen hin abnehmenden Durchmesser D aufweist, wobei der Durchmesser D der größte Durchmesser eines Kreises (10) ist, der in eine senkrecht zur radialen Richtung rR orientierte Querschnittsfläche F des vertikalen Kanals (20) einbeschrieben werden kann,
**dadurch gekennzeichnet, dass**
• dese das Profilband einen Einschnitt (21) aufweist, welcher den vertikalen Kanal (20) schneidet, weitgehend in Umfangsrichtung U verläuft und dabei vor einer benachbarten Vertiefung, insbesondere Rille (3), endet, und dass der Einschnitt (21) eine Tiefe von 1 mm bis 3 mm aufweist.

2. Fahrzeugluftreifen gemäß Anspruch 1, **dadurch gekennzeichnet, dass** die Querschnittsfläche F zumindest abschnittsweise nach radial innen hin abnimmt.

3. Fahrzeugluftreifen gemäß zumindest einem der vorhergehenden Ansprüche, **dadurch gekennzeichnet, dass** der Durchmesser D und/oder die Querschnittsfläche F von der Öffnung (9) bis zum horizontalen Kanal (18) hin stetig abnimmt.

4. Fahrzeugluftreifen gemäß zumindest einem der vorhergehenden Ansprüche, **dadurch gekennzeichnet, dass** der Durchmesser D und/oder die Querschnittsfläche F von einer Starttiefe S bis zum horizontalen Kanal (20) kontinuierlich, insbesondere linear, abnimmt, wobei S 0 mm bis 2,0 mm, bevorzugt 1,0 mm bis 1,5 mm, besonders bevorzugt 1,3 mm bis 1,4 mm, beträgt.

5. Fahrzeugluftreifen gemäß zumindest einem der vorhergehenden Ansprüche, **dadurch gekennzeichnet, dass** die Querschnittsfläche F rund, bevorzugt kreisförmig oder mit einer Haupterstreckungsrichtung, besonders bevorzugt kreisförmig, ausgebildet ist.

6. Fahrzeugluftreifen gemäß zumindest einem der vorhergehenden Ansprüche, **dadurch gekennzeichnet, dass** für den Durchmesser D und/oder die Querschnittsfläche F jeweils gilt, dass ein Verhältnis eines maximalen Wertes zu einem minimalen Wert 1,5 bis 3,3, bevorzugt 1,7 bis 2,5, besonders bevorzugt 2, beträgt.

7. Fahrzeugluftreifen gemäß zumindest einem der vorhergehenden Ansprüche, **dadurch gekennzeichnet, dass** der Einschnitt (21) eine Tiefe von 1,2 mm bis 1,8 mm, bevorzugt von 1,5 mm, aufweist.

8. Fahrzeugluftreifen gemäß zumindest einem der vorhergehenden Ansprüche, **dadurch gekennzeichnet, dass** die Rille (3) eine Fase (7) aufweist.

9. Fahrzeugluftreifen gemäß zumindest einem der vorhergehenden Ansprüche, **dadurch gekennzeichnet, dass** sich der horizontale Kanal (18) vom vertikalen Kanal (20) zu beiden Umfangsrillen (1) hin aufweitet.

10. Fahrzeugluftreifen gemäß zumindest einem der vorhergehenden Ansprüche, **dadurch gekennzeichnet, dass** das Profilband (2), insbesondere der vertikale Kanal (20), einen Reifenäquator (22) schneidet.

## Claims

1. Pneumatic vehicle tyre having a profiled tread with at least one profile strip (2) delimited by two circumferential grooves (1), in particular a circumferential rib (2) or a row of profile blocks, which has at least one groove (3) that connects the two circumferential grooves (1) and has a width B of 0.4 mm to 1.2 mm,
• wherein the groove (3) has as local widenings a vertical channel (20) and a horizontal channel (18), wherein the vertical channel (20) opens out into the horizontal channel (18) in a radially inwardly running manner from an opening (9) in the tread surface (5) and is connected in this way to the two circumferential grooves (1),
• wherein the vertical channel (20) has at least in certain portions a radially inwardly decreasing diameter D, the diameter D being the largest diameter of a circle (10) which can be inscribed in a cross-sectional area F of the vertical channel (20) that is oriented perpendicularly to the radial direction rR,
**characterized in that**
• the profile strip has a sipe (21), which intersects the vertical channel (20), runs largely in the circumferential direction U and ends in front of an adjacent depression, in particular groove (3), and **in that** the sipe (21) has a depth of 1 mm to 3 mm.

2. Pneumatic vehicle tyre according to Claim 1, **characterized in that**, at least in certain portions, the cross-sectional area F decreases radially inwards.

3. Pneumatic vehicle tyre according to at least one of the preceding claims, **characterized in that** the diameter D and/or the cross-sectional area F decreases steadily from the opening (9) to the horizontal channel (18).

4. Pneumatic vehicle tyre according to at least one of the preceding claims, **characterized in that** the diameter D and/or the cross-sectional area F decreases continuously, in particular linearly, from a starting depth S to the horizontal channel (20), where S is 0 mm to 2.0 mm, preferably 1.0 mm to 1.5 mm, particularly preferably 1.3 mm to 1.4 mm.

5. Pneumatic vehicle tyre according to at least one of the preceding claims, **characterized in that** the cross-sectional area F is formed as round, preferably circular, or with a main direction of extent, particularly preferably circular.

6. Pneumatic vehicle tyre according to at least one of the preceding claims, **characterized in that**, for the diameter D and/or the cross-sectional area F, it applies in each case that a ratio of a maximum value to a minimum value is 1.5 to 3.3, preferably 1.7 to 2.5, particularly preferably 2.

7. Pneumatic vehicle tyre according to at least one of the preceding claims, **characterized in that** the sipe (21) has a depth of 1.2 mm to 1.8 mm, preferably of 1.5 mm.

8. Pneumatic vehicle tyre according to at least one of the preceding claims, **characterized in that** the groove (3) has a bevel (7).

9. Pneumatic vehicle tyre according to at least one of the preceding claims, **characterized in that** the horizontal channel (18) widens from the vertical channel (20) towards both circumferential grooves (1).

10. Pneumatic vehicle tyre according to at least one of the preceding claims, **characterized in that** the profile strip (2), in particular the vertical channel (20), intersects a tyre equator (22).

## Revendications

1. Pneumatique de véhicule comprenant une bande de roulement profilée présentant au moins une bande de profil (2) délimitée par deux rainures circonférentielles (1), en particulier une nervure circonférentielle (2) ou une rangée de blocs de profil, laquelle présente au moins une rainure (3) reliant les deux rainures circonférentielles (1) et ayant une largeur B de 0,4 mm à 1,2 mm,
• dans laquelle la rainure (3) présente, en tant qu'élargissements locaux, un canal vertical (20) et un canal horizontal (18), le canal vertical (20), s'étendant radialement vers l'intérieur à partir d'une ouverture (9) de la surface de la bande de roulement (5), débouchant dans le canal horizontal (18) et étant relié, par l'intermédiaire de celui-ci, aux deux rainures circonférentielles (1),
• dans laquelle le canal vertical (20) présente, au moins par sections, un diamètre D diminuant radialement vers l'intérieur, le diamètre D étant le plus grand diamètre d'un cercle (10) pouvant être inscrit dans une surface de section transversale F du canal vertical (20) orientée perpendiculairement à la direction radiale rR,
**caractérisé en ce que**
• la bande de profil présente une incision (21) qui coupe le canal vertical (20), s'étend sensiblement dans la direction circonférentielle U et se termine avant un évidement adjacent, en particulier une rainure (3), et l'incision (21) présente une profondeur de 1 mm à 3 mm.

2. Pneumatique de véhicule selon la revendication 1, **caractérisé en ce que** la surface de section transversale F diminue, au moins par sections, radialement vers l'intérieur.

3. Pneumatique de véhicule selon au moins l'une des revendications précédentes, **caractérisé en ce que** le diamètre D et/ou la surface de section transversale F diminue de manière continue de l'ouverture (9) jusqu'au canal horizontal (18).

4. Pneumatique de véhicule selon au moins l'une des revendications précédentes, **caractérisé en ce que** le diamètre D et/ou la surface de section transversale F diminue de manière continue, en particulier linéairement, d'une profondeur de départ S jusqu'au canal horizontal (20), S étant de 0 mm à 2,0 mm, de préférence de 1,0 mm à 1,5 mm, de manière particulièrement préférée de 1,3 mm à 1,4 mm.

5. Pneumatique de véhicule selon au moins l'une des revendications précédentes, **caractérisé en ce que** la surface de section transversale F est de forme arrondie, de préférence circulaire ou présentant une direction d'extension principale, de manière particulièrement préférée circulaire.

6. Pneumatique de véhicule selon au moins l'une des revendications précédentes, **caractérisé en ce que**, pour le diamètre D et/ou la surface de section transversale F, le rapport d'une valeur maximale à une valeur minimale est respectivement de 1,5 à 3,3, de préférence de 1,7 à 2,5, de manière particulièrement préférée de 2.

7. Pneumatique de véhicule selon au moins l'une des revendications précédentes, **caractérisé en ce que** l'incision (21) présente une profondeur de 1,2 mm à 1,8 mm, de préférence de 1,5 mm.

8. Pneumatique de véhicule selon au moins l'une des revendications précédentes, **caractérisé en ce que** la rainure (3) présente un chanfrein (7).

9. Pneumatique de véhicule selon au moins l'une des revendications précédentes, **caractérisé en ce que** le canal horizontal (18) s'élargit depuis le canal vertical (20) en direction des deux rainures circonférentielles (1).

10. Pneumatique de véhicule selon au moins l'une des revendications précédentes, **caractérisé en ce que** la bande de profil (2), en particulier le canal vertical (20), coupe un équateur du pneumatique (22).
